# EUROPÄISCHE PATENTSCHRIFT

(11) **EP 1 903 694 B1**
(45) Veröffentlichungstag und Bekanntmachung des Hinweises auf die Patenterteilung: **15.08.2018**
(21) Anmeldenummer: 07017660.7
(22) Anmeldetag: 10.09.2007
(51) Int. Cl.: H04B 17/24, H04B 17/00, H04W 24/06, H04W 88/08

(54) **Signalgenerator und Verfahren zum Testen einer Basisstation**
Signal generator and method for testing a base station
Générateur de signal et procédé de test d'une station de base

(30) Priorität: 25.09.2006 DE 102006045182
(43) Veröffentlichungstag der Anmeldung: 26.03.2008
(73) Patentinhaber: Rohde & Schwarz GmbH & Co. KG, 81671 München (DE)
(72) Erfinder: Pauly, Andreas, 81673 München (DE); Tietscher, Gerald, 85354 Freising (DE)
(74) Vertreter: Beder, Jens

(56) Entgegenhaltungen:
- WO-A1-2006/048742
- DE-A1- 10 130 686
- DE-A1- 10 324 745

## Beschreibung

Die Erfindung betrifft einen Signalgenerator sowie ein Verfahren zum Testen einer Basisstation für digitalen Mobilfunk.

Ein Signalgenerator dieser Art ist z. B. aus der DE 101 24 371 A1 bekannt.

Zur Übertragung von Daten zwischen einer Basisstation und einem Mobilfunkgerät werden beispielsweise bei einem Mobilfunksystem der dritten Generation (UMTS, Universal Mobile Telecommunication System) auf der Funkstrecke Uplink- und Downlink-Kanäle zur Datenübertragung verwendet. Da eine Datenübertragung bei einmaliger Übermittlung zwischen der Basisstation und dem Mobilfunkgerät fehlerhaft sein kann, wobei diese Fehler evtl. durch die implementierten Korrekturalgorithmen korrigiert werden können, wird die korrekte oder nicht korrekte Übertragung der Daten dem jeweils sendenden Mobilfunkgerät mitgeteilt.

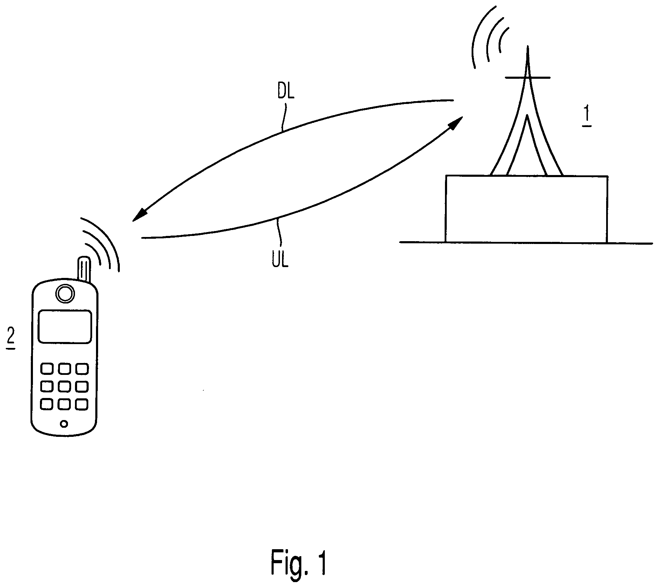

In Fig. 1 ist stark vereinfacht eine solche Situation dargestellt. Die Basisstation 1 kommuniziert dabei mit einem Mobilfunkgerät 2 über zumindest einen Downlink-Kanal DL und einen Uplink-Kanal UL. Von dem Mobilfunkgerät 2 an die Basisstation 1 zu sendende Daten werden durch das Mobilfunkgerät 2 aufbereitet und digital moduliert. Aus dem digital modulierten Signal wird ein Hochfrequenzsignal erzeugt, welches in einem Uplink-Kanal UL zu der Basisstation gesendet wird. Die Basisstation empfängt dieses Hochfrequenzsignal und wertet es aus. Bei der Aufbereitung der zu sendenden Daten durch das Mobilfunkgerät wird zu den Nutzdaten eine Prüfgröße ergänzt, mittels der eine Überprüfung der Richtigkeit der Datenübermittlung von dem Mobilfunkgerät 2 an die Basisstation 1 durchgeführt werden kann. Wird aufgrund einer Überprüfung dieser Prüfgröße eine richtige und vollständige Übertragung der Daten durch die Basisstation 1 erkannt, so wird im Downlink-Kanal DL ein sogenanntes "Acknowledge"-Signal ("ACK") an das Mobilfunkgerät 2 gesendet. Das Übermitteln des "ACK"-Signals erfolgt ebenfalls über die Funkstrecke als digital moduliertes Hochfrequenzsignal, welches durch das Mobilfunkgerät 2 ausgewertet werden muss. Die Auswertung umfasst die Demodulation sowie die Auswertung des Inhalts.

Ergibt die Auswertung in dem Mobilfunkgerät 2, dass die zuvor übertragenen Daten durch die Basisstation 1 korrekt empfangen wurden, so wird ein Datenpaket mit neuen Nutzdaten als Basis für einen nachfolgend zu sendenden Hochfrequenzsignalabschnitt verwendet.

War dagegen ein korrektes Empfangen der in dem gesendeten Hochfrequenzsignalabschnitt enthaltenen Daten durch die Basisstation 1 nicht möglich, so wird durch die Basisstation 1 ein "Not-Acknowledged"-Signal ("NACK") über einen Downlink-Kanal DL an das Mobilfunkgerät 2 übermittelt. Empfängt das Mobilfunkgerät 2 ein solches "NACK"-Signal, so werden die zuvor bereits gesendeten Nutzdaten noch einmal gesendet. Dazu wird allerdings ein sich von dem ersten übertragenen Datensatz unterscheidender hierzu jedoch redundanter Datensatz verwendet.

Die Qualität einer Basisstation kann überprüft werden, indem die Anzahl der "NACK"-Signale ermittelt und in ein Verhältnis zu den korrekt empfangenen Daten gesetzt wird. Zum Testen der Basisstation wird hierzu üblicherweise ein Kommunikationstester eingesetzt, durch den zumindest ein Uplink-Kanal UL zur Übertragung der Datensätze sowie ein Downlink-Kanal DL zur Übermittlung der "ACK"/"NACK"-Signale von der Basisstation 1 ausgebildet wird. Die Genauigkeit der von dem Kommunikationstester erzeugten Hochfrequenzsignale, die an die zu testende Basisstation gesendet werden, ist jedoch begrenzt. Aufgrund unzureichender Signalqualität kann es daher zu Fehlern bei der Auswertung der von der Basisstation empfangenen Signale kommen. Diese spiegeln jedoch nicht die tatsächliche Performance der Basisstation wider, die sich nur dann korrekt ermitteln lässt, wenn die ankommenden Hochfrequenzsignale von hervorragender Qualität sind. Nur dann sind auftretende Fehler tatsächlich der Basisstation zuzuordnen. Das Dokument WO 2006/048742 A1 offenbart einen Basisstations-Tester. Es ist daher die Aufgabe der Erfindung, ein Messverfahren sowie eine Apparatur zur Messung der Qualität einer Basisstation zu schaffen, bei dem das Ergebnis ausschließlich von der tatsächlichen Leistungsfähigkeit der Basisstation abhängt.

Die Aufgabe wird durch den erfindungsgemäßen Signalgenerator sowie durch das erfindungsgemäße Verfahren gemäß den Ansprüchen 1 und 6 gelöst.

Der erfindungsgemäße Signalgenerator weist einen Signalerzeugungsabschnitt und einen damit verbundenen Steuerungsabschnitt auf. Ein Signalgenerator ist in der Lage auszugebende Signale mit einer hohen Genauigkeit zu erzeugen. Ein Speicher des Signalgenerators umfasst zumindest ein erstes Speichersegment und ein zweites Speichersegment. In dem ersten Speichersegment ist ein erster Datensatz und in dem zweiten Speichersegment ein zweiter Datensatz abgespeichert. Der erste und der zweite Datensatz werden aus demselben Nutzdatensatz als redundante Datensätze erzeugt. Der Steuerungsabschnitt kann auf die Speichersegmente individuell zugreifen, so dass jeweils einer der Datensätze durch den Steuerungsabschnitt auswählbar ist. Dieser ausgewählte Datensatz wird zum Erzeugen und Ausgeben eines digital modulierten Hochfrequenzsignalabschnitts dem Signalerzeugungsabschnitt zugeführt.

Ferner weist der erfindungsgemäße Signalgenerator einen Steueranschluss auf, an dem ein erstes Steuersignal oder ein zweites Steuersignal angelegt werden kann. In einem festlegbaren zeitlichen Abstand von der Ausgabe eines auf Basis eines der Datensätze erzeugten Hochfrequenzsignalabschnitts wird dieses an dem Steueranschluss anliegende Steuersignal in den Steuerungsabschnitt eingelesen. Der Steuerungsabschnitt ist dabei so eingerichtet, dass in Abhängigkeit von dem ersten oder dem zweiten anliegenden Steuersignal die Auswahl desjenigen Datensatzes erfolgt, welcher nachfolgend der Erzeugung und der Ausgabe des digital modulierten Hochfrequenzsignalabschnitts zugrundegelegt wird. Liegt ein erstes Steuersignal an dem Steueranschluss an, so wird ein redundanter Datensatz ausgewählt. Liegt dagegen an dem Steueranschluss ein zweites Steuersignal an, so wird nachfolgend ein bestimmter, festgelegter Datensatz der Erzeugung der Ausgabe eines Hochfrequenzsignalabschnitts ausgewählt.

Bei dem erfindungsgemäßen Verfahren wird mit dem Signalgenerator eine Basisstation verbunden. Eine Datenübertragung zwischen dem Signalgenerator in Richtung zur der Basisstation hin (uplink) erfolgt mittels eines Hochfrequenzsignalabschnitts, welcher durch den Signalgenerator erzeugt und ausgegeben wird. Der Hochfrequenzsignalabschnitt wird auf Basis eines ausgewählten Datensatzes erzeugt. Als mögliche Datensätze werden ausgehend von einem Nutzdatensatz zumindest ein erster und ein sich davon unterscheidender redundanter zweiter, sich hiervon jedoch unterscheidender Datensatz durch den Signalgenerator erzeugt. Jeweils ein Datensatz wird in jeweils einem Speichersegment eines Speichers des Signalgenerators abgespeichert.

Das durch den Signalerzeugungsabschnitt erzeugte und von dem Signalgenerator ausgegebene Hochfrequenzsignal wird durch die Basisstation empfangen und dort ausgewertet. Der Hochfrequenzsignalabschnitt umfasst eine Prüfgröße, mit dessen Hilfe die Basisstation die korrekte Datenübertragung und so die Richtigkeit des erhaltenen Inhalts des Datensatzes überprüft. Werden bei der Überprüfung des ausgewerteten Hochfrequenzsignalabschnitts Fehler festgestellt, so wird durch die Basisstation ein erstes Steuersignal ausgegeben. Wird dagegen eine fehlerfreie Übertragung und Auswertung der Daten des Datensatzes bei der Überprüfung festgestellt, so wird ein zweites Steuersignal ausgegeben. Das Steuersignal wird von der Basisstation über eine Signalleitung dem Signalgenerator zugeführt, der zum Einlesen des Steuersignals mit der Signalleitung an einem Steueranschluss verbunden ist.

In einem festlegbaren zeitlichen Abstand nach dem Ausgeben eines Hochfrequenzsignalabschnitts wird das an dem Steueranschluss anliegende Steuersignal in den Steuerungsabschnitt eingelesen. Wird dabei ein erstes Steuersignal eingelesen, welches als Indikator für eine nicht korrekte Auswertung der zuvor übertragenen Daten steht, so wird durch den Steuerungsabschnitt ein neuer, redundanter Datensatz aus einem Speichersegment des Speichers ausgelesen und für eine nachfolgende Erzeugung und Aussendung eines Hochfrequenzsignalabschnitts verwendet.

Wird dagegen durch den Steuerungsabschnitt ein zweites Steuersignal eingelesen, das die korrekte Übertragung der Daten von dem Signalgenerator an die Basisstation angibt, so wird ein zuvor festgelegter Datensatz aus dem entsprechenden Speichersegment ausgelesen und der Erzeugung und Aussendung des nachfolgenden Hochfrequenzsignalabschnitts zu Grunde gelegt.

In den Unteransprüchen sind vorteilhafte Weiterbildungen des erfindungsgemäßen Signalgenerators so wie des erfindungsgemäßen Testverfahrens ausgeführt.

Insbesondere ist es vorteilhaft, den zeitlichen Abstand zwischen einer Ausgabe eines Hochfrequenzsignalabschnitts und dem Auslesen das an dem Steueranschluss anliegenden Steuersignals aus einem vorbestimmten Anteil und einem einstellbaren Anteil zusammenzusetzen. Der vorbestimmte Anteil spiegelt dabei einen festen Zeitversatz wieder, der sich unmittelbar aus der Anforderung des jeweils dem digital modulierten Hochfrequenzsignalabschnitt zu Grunde liegenden Standards entspricht. Mittels des zusätzlichen einstellbaren Anteils kann dagegen eine Anpassung an beispielsweise zeitliche Verzögerungen durchgeführt werden, die sich aufgrund des unabhängig von der Hochfrequenzübertragung ausgegebenen Steuersignals durch die Basisstation oder durch die interne Signalverarbeitung des Signalgenerators von dem Steueranschluss ergibt. Damit wird sichergestellt, dass auch durch die von dem Standard abweichende Rückführung der Information über die korrekte oder nicht korrekte Übertragung der Daten eine eindeutige und richtige Zuordnung zwischen der zurückgeführten Information und dem jeweils gesendeten Hochfrequenzsignalabschnitt bestehen bleibt. Erfindungsgemäß wird als Steueranschluss ein Eingang des Signalgenerators zur Vorgabe einer Signaldämpfung oder aber ein Triggereingang des Signalgenerators verwendet. Sowohl der Triggereingang als auch der Eingang des Signalgenerators zur Vorgabe einer Signaldämpfung sind bei einer Überprüfung der Performance einer Basisstation nicht erforderlich, so dass bei erfindungsgemäßem Einlesen des dort ohnehin vorgesehenen Triggeranschlusses oder Eingangsanschluss zur Vorgabe einer Dämpfung die erforderliche Rückkopplung der Information seitens der Basisstation realisiert werden kann.

Der Eingang des Signalgenerators zur Vorgabe einer Signaldämpfung bzw. der Triggereingang werden unabhängig von der zeitlichen Abfolge bezüglich des Einlesens des dort anliegenden Steuersignals periodisch ausgelesen und das dort ausgelesene Signal in einem Steuersignalspeicher abgelegt. Um eine zeitrichtige Information zur Übermittlung gewährleisten zu können, wird dieser Steuersignalspeicher in dem vorgebbaren zeitlichen Abstand bezüglich desjenigen vorangegangen ausgesendeten Hochfrequenzsignalabschnitts eingelesen und ausgewertet, dem das Steuersignal zugeordnet ist.

Weiterhin ist es vorteilhaft, wenn der Steuerungsabschnitt mit einer Eingabeschnittstelle verbunden ist, über die ein Parametersatz zur Festlegung eines Hochfrequenzsignaltyps vorgebbar ist. Das Auslesen des Steuersignalspeichers in einem vorgebbaren zeitlichen Abstand nach einer vorausgegangenen Aussendung eines Hochfrequenzsignalabschnitts durch den Steuerungsabschnitt ist dann in Abhängigkeit von einem durch den Parametersatz vorgegebenen Hochfrequenzsignaltyp automatisch durchführbar. Durch den Steuerungsabschnitt werden die Parameter des über die Eingabeschnittstelle zugeführten Parametersatzes eingelesen und ausgewertet und ein Signaltyp für das zu erzeugende und das zu sendende Hochfrequenzsignal ermittelt. Aufgrund dieses Hochfrequenzsignaltyps ergibt sich automatisch eine bestimmte zeitliche Abfolge eines Hochfrequenzsignalabschnitts und der zugeordneten Rückinformation bezüglich der Richtigkeit der übertragenen Daten.

Vorzugsweise ist ferner die Anzahl der zueinander redundanten, jedoch unterschiedlichen Datensätze, die aus denselben Nutzdaten erzeugt werden, vollständig oder teilweise auswählbar. Hierzu wird eine erste Anzahl von Datensätzen in einer ersten Anzahl von Speichersegmenten gespeichert. Aus dieser ersten Anzahl von redundanten Datensätzen ist zur redundanten Datenübertragung eine zweite Anzahl von Datensätzen festlegbar, aus der der jeweils neue Datensatz für die nachfolgende Übertragung eines Hochfrequenzsignalabschnitts auswählbar ist. Die zweite Anzahl ist kleiner oder gleich der ersten Anzahl.

Damit kann die maximale Anzahl von Wiederholungen zur Aussendung derselben Nutzdaten begrenzt werden und erhöht werden, ohne dass eine redundante Datensätze erzeugt werden müssen.

Ein bevorzugtes Ausführungsbeispiel des erfindungsgemäßen Verfahrens sowie des erfindungsgemäßen Signalgenerators ist in der Zeichnung dargestellt. Es zeigen:
- Fig. 1: eine stark vereinfachte schematische Darstellung zur Kommunikation zwischen einem Mobilfunkgerät und einer Basisstation;
- Fig. 2: ein Blockschaltbild eines Testsystems aus einem Signalgenerator und einer Basisstation;
- Fig. 3: eine schematische Darstellung zum zeitlichen Ablauf der Datenübertragung zwischen einem Signalgenerator und der zu testenden Basisstation; und
- Fig. 4: ein Beispiel einer graphischen Ausgabe eines Parametersatzes.

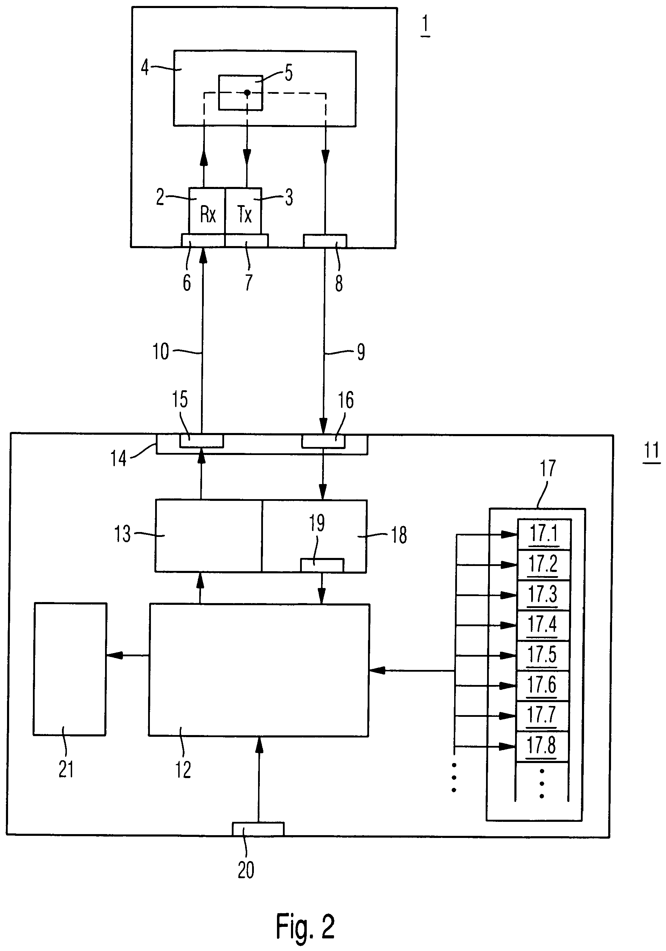

Der Aufbau des erfindungsgemäßen Signalgenerators sowie die Durchführung des erfindungsgemäßen Verfahrens werden anhand der Fig. 2 nachfolgend erläutert.

Eine Basisstation 1 ist mit einem Signalgenerator 11 verbunden. Die Basisstation 1 weist ein Empfangsmodul 2 und ein Sendemodul 3 auf, welche zur Verbindung über Hochfrequenzkanäle mit einem mit der Basisstation 1 verbundenen Mobilfunkgerät 2 vorgesehen sind. Während eines Tests einer Basisstation 1 bezüglich dessen Leistungsfähigkeit beim Empfangen und Auswerten von Hochfrequenzsignalen ist das Empfangsmodul 2 über einen Empfangsanschluss 6 mit dem Signalgenerator 11 verbunden. An dem Empfangsanschluss 6 ankommende Hochfrequenzsignale werden über das Empfangsmodul 2 einer Auswerteeinheit 4 übermittelt. In der Auswerteeinheit 4 wird das ankommende, digital modulierte Hochfrequenzsignal demoduliert und sein Dateninhalt ausgewertet. Wie dies für das Beispiel einer Kommunikation zwischen einem Mobilfunkgerät 2 und der Basisstation 1 anhand der Fig. 1 bereits erläutert wurde, wird in Abhängigkeit von der Auswertung des Dateninhalts des empfangenen Hochfrequenzsignals durch die Auswerteeinheit 4 ein "ACK"- bzw. ein "NACK"-Signal erzeugt.

Dieses "ACK"- bzw. "NACK"-Signal wird im normalen Mobilfunkbetrieb der Basisstation 1 über das Sendemodul 3 und den entsprechenden Sendeanschluss 7 ausgegeben. Zur Durchführung des erfindungsgemäßen Verfahrens weist die Auswerteeinheit 4 eine Ausgabeweiche 5 auf, über die die Information über die Richtigkeit oder fehlerhafte Übertragung des empfangenen Hochfrequenzsignals einem separatem Steuerausgang 8 zugeführt wird. Über den separaten Steuerausgang 8 kann somit ein Steuersignal ausgegeben werden, das die Information über die Richtigkeit der in dem Hochfrequenzsignalabschnit übertragenen Daten enthält. Im einfachsten Fall kann dies beispielsweise ein TTL-Signal sein, wobei ein erstes Steuersignal durch einen "High"-Pegel und ein zweites Steuersignal durch einen "Low"-Pegel gebildet wird. Das erste Steuersignal entspricht dem "NACK"-Signal und das zweite Steuersignal entspricht dem "ACK"-Signal.

Die von der Basisstation 1 während eines Tests auszuwertenden Hochfrequenzsignalabschnitte werden durch den Signalgenerator 11 einzeln und nacheinander erzeugt und ausgegeben. Der Signalgenerator 11 weist hierzu einen Steuerungsabschnitt 12 auf. Der Steuerungsabschnitt 12 ist mit einem Signalerzeugungsabschnitt 13 verbunden, der aus den durch den Steuerungsabschnitt 12 ausgewählten Datensatz einen Hochfrequenzsignalabschnitt erzeugt, welcher zu einem jeweils ausgewählten Standard konform ist. In dem Signalerzeugungsabschnitt 13 wird beispielsweise eine digitale Modulation durchgeführt und das Signal letztlich von einem Zwischenfrequenzsignal auf seine Trägerfrequenz hochgemischt und zum Aussenden durch den Signalgenerator 11 einer Ein-/Ausgabeeinheit 14 zugeführt. Die Ein-/Ausgabeeinheit 14 umfasst zumindest einen Hochfrequenzausgang 15, der über eine Hochfrequenzleitung 10 mit dem Empfangsanschluss 6 der Basisstation 1 verbunden ist.

Der so auf Basis eines von dem Steuerungsabschnitt 12 ausgewählten Datensatzes erzeugte Hochfrequenzsignalabschnitt wird über die Hochfrequenzleitung 10 an die Basisstation 1 weitergeleitet und dort in bereits beschriebener Weise in der Auswerteeinheit 4 ausgewertet. In Abhängigkeit von der Richtigkeit der Datenübertragung bzw. der korrekten Auswertung des empfangenen Hochfrequenzsignalabschnitts in der Auswerteeinheit 4 wird von der Basisstation 1 über den Steuersignalausgang 8 ein erstes Steuersignal oder ein zweites Steuersignal über die Steuersignalleitung 9 einem Steueranschluss der Ein-/Ausgabeeinheit 14 zugeführt. Der Steueranschluss 16 kann beispielsweise ein Triggereingang oder aber ein Eingang zur Vorgabe einer Signaldämpfung des Signalgenerators 11 sein. Das jeweils an dem Steueranschluss 16 anliegende Signal wird periodisch durch eine Ausleseeinheit 18 ausgelesen und der an dem Steueranschluss 16 anliegende Wert des ersten oder zweiten Steuersignals in einem Register 19 als Steuersignalspeicher abgelegt. Da als Steueranschluss 16 vorzugsweise ein Triggeranschluss bzw. ein Eingang zur Einstellung einer Dämpfung verwendet wird, erfolgt das Auslesen des Eingangsanschlusses 16 mit einer sehr hohen Wiederholungsrate, welche in keinem zeitlichen Zusammenhang mit dem Aussenden der Hochfrequenzsignalabschnitte über den Hochfrequenzausgang 15 steht.

Zum Erzeugen eines zeitlichen Zusammenhangs zwischen dem ersten Steuersignal bzw. dem zweiten Steuersignal und dem der Erzeugung dieses ersten oder zweiten Steuersignals zu Grunde liegenden Hochfrequenzsignalabschnitts, welches durch den Signalerzeugungsabschnitt 13 erzeugt wurde, wird durch den Steuerungsabschnitt 12 der an dem Eingangsanschluss 16 anliegende Wert in einem festen zeitlichen Abstand bezüglich dem Aussenden des Hochfrequenzsignalabschnitts durch den Signalgenerator 11 eingelesen. Der Steuerungsabschnitt 12 ist hierzu mit dem Register 19 verbunden. Nachdem ein Hochfrequenzsignalabschnitt eines Datensatzes durch den Signalgenerator 11 an die Basisstation 1 übermittelt wurde, wird also der in dem Register 19 abgespeicherte Wert des von der Basisstation 1 ausgegebenen Steuersignals durch den Steuerungsabschnitt 12 zeitrichtig eingelesen.

Die zur Verfügung stehenden redundanten Datensätze sind in jeweils einem von mehreren Speichersegmenten 17.1 bis 17.8 eines Speichers 17 des Signalgenerators 11 abgespeichert. Der jeweils einem nachfolgenden Hochfrequenzsignalabschnitt zugrundezulegende neue Datensatz wird durch den Steuerungsabschnitt 12 aus einem der Speichersegmente 17.1 bis 17.8 ausgelesen. Welches der Speichersegmente 17.1 bis 17.8 ausgelesen wird, wird durch den Steuerungsabschnitt 12 in Abhängigkeit von dem eingelesenen Steuersignal festgelegt. Bei einer erstmaligen Übertragung eines Hochfrequenzsignalabschnitts zu der Basisstation wird beispielsweise immer der Datensatz des ersten Speichersegments 17.1 dem zu sendenden Hochfrequenzsignalabschnitt zugrundegelegt. Wird aufgrund einer fehlerhaften Auswertung ein erstes Steuersignal über die Steuersignalleitung 9 von der Basisstation 1 an den Signalgenerator 11 zurückgeführt, so wird aufgrund des festgelegten zeitlichen Zusammenhangs zwischen dem Einlesen des Steuersignals durch den Steuerungsabschnitt 12 und dem Aussenden des zugeordneten Hochfrequenzsignalabschnitts eine in bezug auf den vorangegangenen Datensatz bestimmter neuer Datensatz ausgewählt.

In dem angegebenen Beispiel wird zunächst der Datensatz des Speichersegments 17.1 ausgewählt und aus diesem Datensatz ein Hochfrequenzsignalabschnitt erzeugt und ausgesendet. Erfolgt nun seitens der Basisstation 1 eine fehlerhafte Auswertung, die aufgrund einer dem Datensatz des Hochfrequenzsignalabschnitts beigefügten Prüfgröße und Korrekturgröße erkannt wird, so sendet die Basisstation 1 ein erstes Steuersignal zurück an den Signalgenerator 11. Der Steuerungsabschnitt 12 liest nun zu einem späteren, festlegbaren Zeitpunkt das erste Steuersignal ein und wählt einen anderen Datensatz aus, der einen neuen Hochfrequenzsignalabschnitt für eine nachfolgende Übertragung zugrundegelegt wird. Die einzelnen Datensätze, die in den Speichersegmenten 17. 1 bis 17.8 abgespeichert sind, sind zueinander redundant und werden aus denselben Nutzdaten erzeugt. Die Datensätze werden durch Kodierung z. B. Convolutional Coding oder Turbo Coding) beispielsweise nach einem bestimmten Punktierungsschema als redundante Datensätze erzeugt.

Auf Basis dieses neu ausgewählten Datensatzes durch den Steuerungsabschnitt 12 wird durch den Signalerzeugungsabschnitt 13 ein neuer Hochfrequenzsignalabschnitt erzeugt und über den Hochfrequenzausgang 15 an die Basisstation 1 übermittelt. Die Basisstation 1 ihrerseits wertet nun den neu empfangenen Hochfrequenzsignalabschnitt in der Auswerteeinheit 4 aus und ermittelt wiederum unter Verwendung der in dem Hochfrequenzsignalabschnitt enthaltenen Prüfgröße die Richtigkeit der Datenübertragung. Bei einer erneut fehlerhaften Übertragung oder Auswertung des Inhalts des Datensatzes wird erneut ein erstes Steuersignal ausgegeben. Dieses wird wiederum durch den Steuerungsabschnitt 12 zeitrichtig eingelesen. Der Steuerabschnitt wählt abermals einen neuen, redundanten Datensatz aus, beispielsweise den in dem Speichersegment 17.3 gespeicherten Datensatz. Der dort abgelegte Datensatz ist wiederum redundant zu den Datensätzen der Speichersegmente 17.1 und 17.2, unterscheidet sich jedoch wiederum von beiden dort abgelegten Datensätzen.

Das erneute Senden eines redundanten Datensatzes mit demselben Nutzdateninhalt wird als sog. Re-Transmission bezeichnet. Die maximale Anzahl der Re-Transmissionen ist festlegbar. Somit wird bei Erreichen der maximalen Anzahl der Re-Transmissionen unabhängig von dem Empfangen und Einlesen eines ersten Steuersignals eine Wiederholung der Übertragung redundanter Daten abgebrochen und eine neue erstmalige Datenübertragung gestartet. Zur neuen Datenübertragung wird durch den Steuerungsabschnitt 12 wiederum der erste Datensatz, der in dem Speichersegment 17.1 abgespeichert ist, ausgewählt und dem Signalerzeugungsabschnitt 13 zugeführt.

Der Beginn einer Datenübertragung mit dem Datensatz des Speichersegments 17.1 und die Auswahl mit steigender Indizierung der Speichersegmente bei einer Wiederholung der Datenübertragung ist beispielhaft und zeigt die nach einem vorgegebenen Schema durchgeführte Auswahl der Datensätze durch den Steuerabschnitt 12.

Wird bereits vor Erreichen der maximalen Anzahl von RE-Transmissionen durch die Auswerteeinheit 4 eine korrekte Auswertung der übertragenen Daten in dem Hochfrequenzsignalabschnitt erkannt, so wird über den Steuersignalausgang 8 ein zweites Steuersignal an den Eingangsanschluss 16 angelegt, das einem "ACK"-Signal entspricht. Dieses zweite Steuersignal wird aufgrund des periodischen Auslesens des Eingangsanschlusses 16 durch die Ausleseeinheit 18 unmittelbar nach Anliegen an dem Eingangsanschluss 16 in dem Register 19 abgelegt. Das Register 19 bildet den Steuersignalspeicher und wird anschließend durch den Steuerungsabschnitt 12 zu einem festgelegten Zeitpunkt nach Übertragung des Datensatzes in einem Hochfrequenzsignalabschnitt an die Basisstation 1 eingelesen. Wird durch den Steuerungsabschnitt 12 ein zweites Steuersignal erkannt, so wird der Prozess beendet, ohne dass eine weitere Wiederholung der Übertragung weiteren redundanten Datensatzes erfolgt. An Stelle der Übermittlung neuer redundanter Daten wird wieder der Datensatz des ersten Speichersegments 17.1 als neue erstmalige Übermittlung gesendet.

Während bei einer realen Verbindung zwischen einem Mobilfunkgerät 2 und der Basisstation 1 nun neue Nutzdaten übertragen werden, wird bei der Durchführung des Tests vorzugsweise immer auf dieselben Nutzdaten zurückgegriffen. An Stelle neuer Nutzdaten wird somit wiederum der erste zu Prozessbeginn genutzte Datensatz des ersten Speichersegments 17.1 verwendet. Als Nutzdaten kann beispielsweise eine Pseudo-Random-Frequenz verwendet werden.

Zur Auswertung und Beurteilung der Leistungsfähigkeit der Basisstation 1 wird die Anzahl der eingelesenen ersten Steuersignale und zweiten Steuersignale durch eine Bewertungseinheit 21 bewertet und eine Blockfehlerrate (BLER; Block Error Ratio) berechnet.

Die zum Ablauf des erfindungsgemäßen Verfahrens erforderlichen Parameter werden dem Signalgenerator 11 über eine Schnittstelle 20 zugeführt, die mit dem Steuerungsabschnitt 12 verbunden ist. Die Schnittstelle 20 kann beispielsweise mit einer Tastatur und einer graphischen Ausgabeeinheit verbunden sein. Insbesondere wird über die Schnittstelle 20 ein Parametersatz eingegeben, der Informationen bezüglich des dem zu erzeugenden Hochfrequenzsignalabschnitts zugrundeliegenden Standard enthält.

Um die erforderlichen Berechnungen während der Durchführung des Testverfahrens möglichst gering zu halten, ist es vorteilhaft, eine erste Anzahl von Speichersegmenten 17.1 bis 17.8 in dem Speicher 17 vorzusehen, wobei in jedem der Speichersegmente 17.1 bis 17.8 ein redundanter Datensatz derselben Nutzdaten abgespeichert ist. In Abhängigkeit von einem der Parameter, die über die Schnittstelle 20 dem Steuerungsabschnitt 12 zugeführt werden, wird bei der Auswahl eine zweite Anzahl von Datensätzen berücksichtigt, welche höchstens genauso groß ist wie die maximale Anzahl verfügbarer Datensätze. Insbesondere ist es vorteilhaft lediglich einen Teil der ersten Anzahl der Datensätze für die Re-Transmissionen zu verwenden.

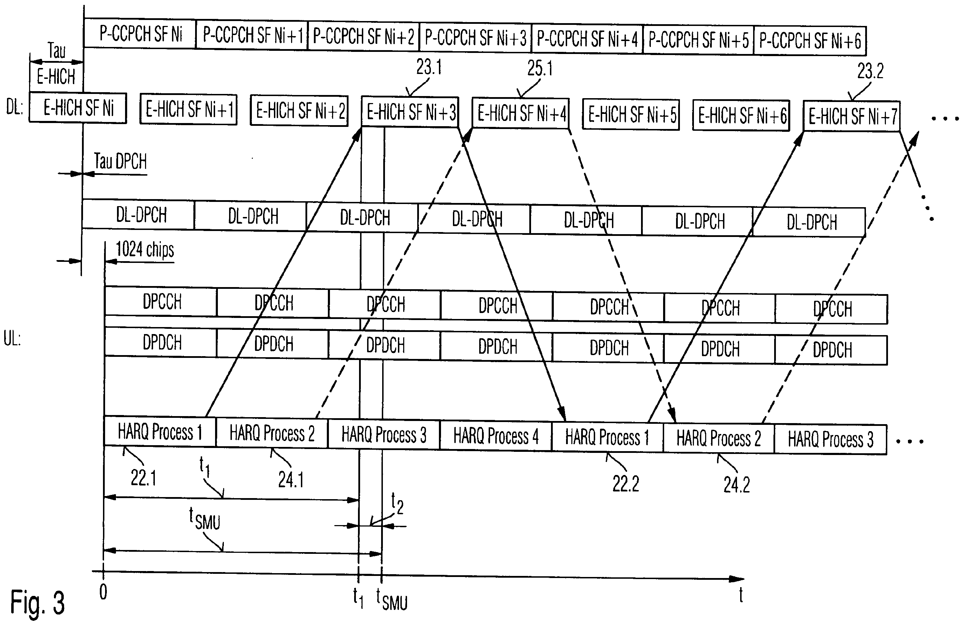

In der Fig. 3 ist noch einmal der zeitliche Ablauf dargestellt. Mit dem Bezugszeichen 22.1 ist dort ein erster Hochfrequenzsignalabschnitt eines ersten sogenannten HARQ-Prozesses bezeichnet (Hybrid Automatic Repeat Request). Dieser erste Hochfrequenzsignalabschnitt, der auf dem Datensatz des ersten Speichersegments 17.1 beruht, wird im Uplink an die Basisstation 1 übermittelt. Die Basisstation 1 wertet den Hochfrequenzsignalabschnitt aus und gibt eine Rückinformation über den Steuersignalausgang 8 aus. Diese Rückinformation ist in der Fig. 3 als Downlink-Signal-Abschnitt 23.1 dargestellt, der über einen definierten Downlink-Kanal (EHICH; Enhanced Hybrid Automatic Repeat Request Indicator Channel) dem Mobilfunkgerät übermittelt wird. Zwischen dem ausgesandten ersten Hochfrequenzsignalabschnitt 22.1 und dem zugeordneten Rückinformationssignal 23.3 liegt ein definierter zeitlicher Abstand t₁.

Da der Signalgenerator 11 nicht über einen Hochfrequenz-Empfangskanal verfügt kann die genaue zeitliche Korrelation zwischen dem gesendeten Hochfrequenzsignalabschnitt und der Rückinformation nicht durch den Verbindungsaufbau festgelegt werden. Der zeitliche Abstand zwischen einem ausgesandten Hochfrequenzsignalabschnitt 22.1 und dem Auslesen des an dem Steueranschluss 16 anliegenden Steuersignals des Signalgenerators 11 setzt sich daher zusammen aus der aufgrund des Standards fest vorgegebenen Zeit t₁ und einer einstellbaren Zeit t₂. Die Zeiten t₁ und t₂ werden zu einer Gesamtzeit t_{SMU} summiert.

Nach Ablauf der Gesamtzeit t_{SMU} nach dem Aussenden eines Hochfrequenzsignalabschnitts 22.1 wird durch den Steuerungsabschnitt 12 der Steueranschluss 16 das Register 19 ausgelesen und so die Information über das an dem Eingangsanschluss 16 anliegende Steuersignal, das den vorangegangenen Hochfrequenzsignalabschnitt zugeordnet ist, eingelesen. In der Abhängigkeit von dem ersten eingelesenen Steuersignal bzw. dem zweiten eingelesenen Steuersignal wird anschließend in bereits beschriebener Weise ein neuer Datensatz ausgewählt und ein weiterer Hochfrequenzsignalabschnitt 22.2 ausgesendet, der zu demselben HARQ-Prozess gehört.

Wie dies in der Fig. 3 dargestellt ist, können mehrere HARQ-Prozesse gleichzeitig ablaufen, wobei die jeweilige Zuordnung der Steuersignale, die den "ACK"- bzw. "NACK"-Signalen 23.1 oder 25.1 entsprechen aufgrund des festlegbaren zeitlichen Abstands eindeutig zugeordnet werden.

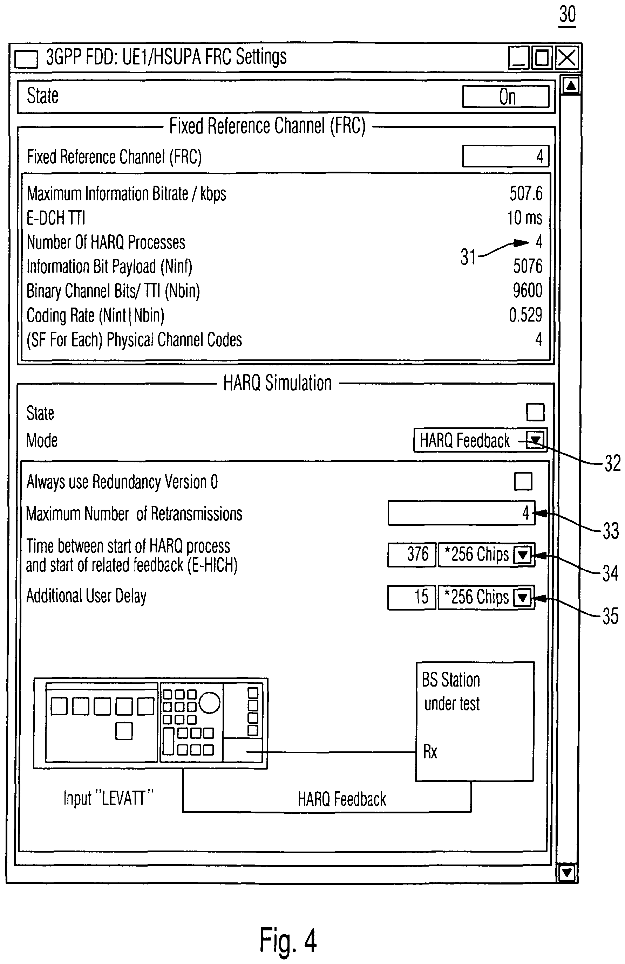

In der Fig. 4 ist eine graphische Ausgabe eines Parametersatzes dargestellt, der über die Schnittstelle 20 dem Steuerungsabschnitt 12 zugeführt wird. Der Parametersatz enthält insbesondere die Anzahl der parallel zueinander laufenden HARQ-Prozesse, wie in der Fig. 4 bei dem Bezugszeichen 31 gezeigt ist. Über ein Auswahlfeld 32 kann die Rückführung der Information von der Basisstation 1 auch abgeschaltet werden. Ferner ist in einem Eingabefeld 33 eine maximale Anzahl von Re-Transmissionen eingebbar.

In dem dargestellten Ausführungsbeispiel ist die maximale Anzahl von Re-Transmissionen auf 4 eingestellt, so dass nach einer ersten Übertragung eines Datensatzes in einem Hochfrequenzsignalabschnitt lediglich vier weitere redundante Datensätze ausgewählt werden. Bei einer fortlaufenden Auswahl der Datensätze aus den Speichersegmenten 17.1 bis 17.8 würde einer erstmaligen Übertragung eines Hochfrequenzsignalabschnitts auf Basis des Datensatzes des ersten Speichersegments 17.1 maximal vier weitere Hochfrequenzsignalabschnitte folgen, wobei jeder der folgenden Hochfrequenzsignalabschnitte auf einem Datensatz der Speichersegmente 17.2 bis 17.5 beruht.

Zur Vorgabe des zeitlichen Abstandes zwischen dem Einlesen des an dem Eingangsanschluss 16 anliegenden Steuersignals und dem vorangegangenen Hochfrequenzsignalabschnitt ist ein erstes Zeitauswahlfeld 34 und ein zweites Zeitauswahlfeld 35 vorgesehen. Während das erste Zeitauswahlfeld 34 aufgrund der in dem Standard für einen bestimmten Hochfrequenzsignaltyp festgelegten Zeitablaufs fest vorgegeben ist, kann über eine frei wählbare Zeit t₂ die tatsächliche zeitliche Lage des von der Basisstation 1 zurückgegebenen Steuersignals in bezug auf den zugeordneten Hochfrequenzsignalabschnitt erfolgen. Bei dem vorgeschlagenen Verfahren, welches insbesondere für Mobilfunkbasisstationen für Mobilfunk der dritten Generation eingesetzt wird, erfolgt die Angabe der Zeiten t₁ und t₂ in ganzzahligen Vielfachen von beispielsweise 256 Chips sowie dies in dem ersten und zweiten Zeitauswahlfeld 34, 35 dargestellt ist.

Der Signalgenerator und das Testverfahren sind nicht auf das dargestellte Ausführungsbeispiel beschränkt. Insbesondere sind auch einzelne Merkmale der Ausführungsbeispiele miteinander kombinierbar.

## Patentansprüche

1. Signalgenerator zum Testen von Basisstationen für digitalen Mobilfunk mit einem Signalerzeugungsabschnitt und einem damit verbundenen Steuerungsabschnitt (12) und mit einem Speicher (17), der zumindest ein erstes Speichersegment (17.i) und ein zweites Speichersegment (17.i) umfasst, wobei in dem ersten Speichersegment (17.i) ein erster Datensatz und in dem zweiten Speichersegment (17.i) ein zweiter Datensatz gespeichert ist, wobei der erste und der zweite Datensatz denselben Nutzdateninhalt aufweisen und sich voneinander unterscheiden und jeweils einer der Datensätze auswählbar und zum Erzeugen und Ausgeben eines digital modulierten Hochfrequenzsignalabschnitts dem Signalerzeugungsabschnitt (13) zuführbar ist, und mit einem Steueranschluss (16), an dem ein erstes Steuersignal oder ein zweites Steuersignal anliegt, das in einem festlegbaren zeitlichen Abstand (tSMU) zu einer vorausgegangenen Ausgabe eines auf Basis eines der Datensätze erzeugten Hochfrequenzsignalabschnitts in den Steuerungsabschnitt (12) einlesbar ist, wobei der Steuerungsabschnitt (12) so eingerichtet ist, dass bei Einlesen des ersten Steuersignals zur Erzeugung und zur Ausgabe eines nachfolgenden Hochfrequenzsignalabschnitts ein sich von dem der Erzeugung und Ausgabe des vorausgegangenen Hochfrequenzsignalabschnitts zugrunde liegenden Datensatz unterscheidender Datensatz mit demselben Nutzdateninhalt ausgewählt wird und dass bei Einlesen des zweiten Steuersignals ein bestimmter Datensatz ausgewählt wird, wobei der Steueranschluss (16) ein Eingang des Signalgenerators (11) zur Vorgabe einer Signaldämpfung oder ein Triggereingang des Signalgenerators (11) ist, wobei der Eingang bzw. der Triggereingang periodisch auslesbar ist und das anliegende Steuersignal in einem Steuersignalspeicher (19) abspeicherbar ist und der Steuersignalspeicher (19) mit dem Steuerungsabschnitt (12) verbunden ist.

2. Signalgenerator nach Anspruch 1,
**dadurch gekennzeichnet,**
**dass** der vorgebbare zeitliche Abstand (tSMU) aus einem vorbestimmten Anteil (t1) und einem einstellbaren Anteil (t2) zusammengesetzt ist.

3. Signalgenerator nach Anspruch 1 oder 2,
**dadurch gekennzeichnet,**
**dass** der Steuerungsabschnitt (12) mit einer Eingabeschnittstelle (20) verbunden ist, über die ein Parametersatz zur Festlegung eines Hochfrequenzsignaltyps vorgebbar ist und ein Auslesen des Steuersignalspeichers (19) in einem vorgebbaren zeitlichen Abstand (tSMU) nach einer vorausgegangenen Ausgabe eines Hochfrequenzsignalabschnitts durch den Signalerzeugungsabschnitt (13) in Abhängigkeit von einem durch den Parametersatz festgelegten Hochfrequenzsignaltyp automatisch durchführbar ist.

4. Signalgenerator nach einem der Ansprüche 1 bis 3,
**dadurch gekennzeichnet,**
**dass** eine Reihenfolge der bei Anliegen eines ersten Steuersignals nacheinander dem Signalerzeugungsabschnitt (13) zuführbaren Datensätze vorgebbar ist.

5. Signalgenerator nach einem der Ansprüche 1 bis 4,
**dadurch gekennzeichnet,**
**dass** der Speicher (17) zumindest eine erste Anzahl von Speichersegmenten (17.i) aufweist und in den Speichersegmenten (17.i) jeweils ein Datensatz gespeichert ist, wobei die Datensätze denselben Nutzdateninhalt aufweisen und sich voneinander unterscheiden und eine auswählbare zweite Anzahl von Datensätzen festlegbar ist, die kleiner ist als die erste Anzahl von Datensätzen.

6. Verfahren zum Testen von Basisstationen für digitalen Mobilfunk durch einen Signalgenerator (1) mit folgenden Verfahrensschritten:
- Erzeugen zumindest eines ersten und eines zweiten Datensatzes mit demselben Nutzdateninhalt aus kodierten Nutzdaten durch den Signalgenerator (11),
- Speichern des ersten und des zweiten Datensatzes in jeweils einem Speichersegment (17.i) eines Speichers (17) des Signalgenerators (11),
- Auswählen eines Datensatzes durch einen Steuerungsabschnitt (12) und Erzeugen eines digital modulierten Hochfrequenzsignalabschnitts durch einen Signalerzeugungsabschnitt (13) des Signalgenerators (11),
- Ausgeben des digital modulierten Hochfrequenzsignalabschnitts,
- Empfangen und Auswerten des digital modulierten Hochfrequenzsignalabschnitts durch eine Basisstation (1),
- Überprüfen des ausgewerteten Hochfrequenzsignalabschnitts auf Fehler in einem Auswerteabschnitt (4),
- Ausgeben eines ersten Steuersignals bei Feststellen von Fehlern in dem ausgewerteten Hochfrequenzsignalabschnitt oder eines zweiten Steuersignals bei korrekt ausgewertetem Hochfrequenzsignalabschnitt über einen Steuersignalausgang (8),
- Einlesen des ersten oder zweiten Steuersignals durch den Steuerungsabschnitt (12) in einem festlegbaren zeitlichen Abstand (tSMU) von der Ausgabe des modulierten Hochfrequenzsignalabschnitts,
- Auswählen eines neuen Datensatzes eines der Speichersegmente (17.i) durch den Steuerungsabschnitt (12), wobei ein Datensatz ausgewählt wird, der denselben Nutzdateninhalt aufweist und sich von dem zuvor ausgewählten Datensatz unterscheidet, wenn ein erstes Steuersignal eingelesen wurde, und wobei ein bestimmter Datensatz ausgewählt wird, wenn ein zweites Steuersignal eingelesen wurde und
- Erzeugen eines neuen, digital modulierten Hochfrequenzsignalabschnitts durch den Signalerzeugungsabschnitt (13) aus dem neuen Datensatz und Ausgeben des Hochfrequenzsignalabschnitts, wobei
die Basisstation (12) mit einem Eingang (16) des Signalgenerators (11) zur Vorgabe einer Signaldämpfung oder einem Triggereingang (16) des Signalgenerators (11) verbunden wird und das an dem Eingang (16) bzw. dem Triggereingang (16) des Signalgenerators (11) anliegende erste oder zweite Steuersignal periodisch in einem Steuersignalspeicher (19) abgespeichert wird und aus dem Steuersignalspeicher (19) in den Steuerungsabschnitt (12) in einem festlegbaren zeitlichen Abstand (tSMU) zu jeweils einer Ausgabe eines Hochfrequenzsignalabschnitts eingelesen wird.

7. Verfahren nach Anspruch 6,
**dadurch gekennzeichnet, dass**
der festlegbare zeitliche Abstand (tSMU) der Ausgabe eines Hochfrequenzsignalabschnitts und dem Einlesen des Steuersignals durch den Signalerzeugungsabschnitt (12) als Summe aus einem vorbestimmten Anteil (t1) und einem einstellbaren Anteil (t2) gebildet wird.

8. Verfahren nach Anspruch 6 oder 7,
**dadurch gekennzeichnet,**
**dass** ein Parametersatz zur Festlegung eines Hochfrequenzsignaltyps durch den Steuerungsabschnitt (12) eingelesen wird und in Abhängigkeit von einem erkannten Hochfrequenzsignaltyp der Steuersignalspeicher (19) in einem vorgebbaren zeitlichen Abstand (tSMU) zu einer vorausgegangenen Aussendung eines Hochfrequenzsignalabschnitts durch den Steuerungsabschnitt (12) automatisch ausgelesen wird.

9. Verfahren nach einem der Ansprüche 6 bis 8,
**dadurch gekennzeichnet,**
**dass** eine Reihenfolge, in der die redundanten Datensätze nach Einlesen eines ersten Steuersignals durch den Steuerungsabschnitt (12) ausgewählt werden, einem vorgebbaren Schema folgt.

10. Verfahren nach einem der Ansprüche 6 bis 9,
**dadurch gekennzeichnet,**
**dass** in zumindest einer ersten Anzahl von Speichersegmenten (17.i) des Speichers (17) eine erste Anzahl von unterschiedlichen, denselben Nutzdateninhalt aufweisende Datensätzen gespeichert wird und die Auswahl der neuen Datensätze der Speichersegmente (17.i) aus einer festlegbaren zweiten Anzahl von Datensätzen erfolgt, wobei die zweite Anzahl kleiner oder gleich der ersten Anzahl ist.

## Claims

1. Signal generator for testing base stations for digital mobile radio with a signal generating section and a control section (12) connected with it and with a memory (17) which comprises at least a first memory segment (17.i) and a second memory segment (17.i), wherein a first set of data is stored in the first memory segment (17.i) and a second set of data is stored in the second memory segment (17.i), wherein the first and the second sets of data have the same useful data content and differ from one another and in each case one of the sets of data can be supplied to the signal generating section (13) selectively and for generating and outputting a digitally modulated high frequency signal section, and with a control connection (16) at which is present a first control signal or a second control signal which can be read into the control section (12) at a predefinable interval of time (tSMU) following a preceding outputting of a high frequency signal section generated on the basis of one of the sets of data, wherein the control section (12) is configured so that when the first control signal is read in for generating and for outputting a following high frequency signal section a set of data differing from the set of data forming the basis for generating and outputting the preceding high frequency signal section having the same useful data content is selected, and so that when the second control signal is read in a specific set of data having the same useful data content is selected, wherein the control connection (16) is an input of the signal generator (11) for setting signal attenuation or a trigger input of the signal generator (11), wherein the input or the trigger input can be read out periodically and the control signal which is present can be stored in a control signal memory (19) and the control signal memory (19) is connected with the control section (12).

2. Signal generator according to claim 1,
**characterised in that**
the predefinable interval of time (tSMU) is composed of a predetermined portion (t1) and an adjustable portion (t2).

3. Signal generator according to claim 1 or 2,
**characterised in that**
the control section (12) is connected with an input interface (20) through which a set of parameters can be predefined for determining a high frequency signal type and a read out of the control signal memory (19) can be carried out automatically at a predefinable interval of time (tSMU) following a preceding outputting of a high frequency signal section by the signal generating section (13) depending on a high frequency signal type determined by the set of parameters.

4. Signal generator according to one of claims 1 to 3,
**characterised in that**
a sequence of the sets of data which can be supplied successively to the signal generating section (13) when a first control signal is present can be predefined.

5. Signal generator according to one of claims 1 to 4,
**characterised in that**
the memory (17) has at least a first number of memory segments (17.i) and a set of data is stored in each of the memory segments (17.i), wherein the sets of data have the same useful data content and differ from one another and a selectable second number of sets of data can be determined which is smaller than the first number of sets of data.

6. Method for testing base stations for digital mobile radio by means of a signal generator (1) with the following method steps:
- generation of at least a first and a second set of data with the same useful data content from coded useful data by the signal generator (11),
- storage of the first and the second sets of data in each memory segment (17.i) of a memory (17) of the signal generator (11),
- selection of a set of data by a control section (12) and generation of a digitally modulated high frequency signal section by a signal generating section (13) of the signal generator (11),
- outputting of the digitally modulated high frequency signal section,
- reception and evaluation of the digitally modulated high frequency signal section by a base station (1),
- checking of the evaluated high frequency signal section for errors in an evaluating section (4),
- outputting of a first control signal if errors are found in the evaluated high frequency signal section or of a second control signal if the high frequency signal section is found to be correct through a control signal output (8),
- inputting of the first or the second control signal by the control section (12) at a predefinable interval of time (tSMU) following the outputting of the modulated high frequency signal section,
- selection of a new set of data of one of the memory segments (17.i) by the control section (12), wherein a set of data is selected which has the same useful data content and differs from the previously selected set of data when a first control signal was inputted, and wherein a specific set of data is selected when a second control signal was inputted, and
- generation of a new digitally modulated high frequency signal section by the signal generating section (13) from the new set of data and outputting of the high frequency signal section, wherein
the base station (12) is connected with an input (16) of the signal generator (11) for defining signal attenuation or a trigger input of the signal generator (16) and the first or second control signal which is present at the input (16) or the trigger input (16) of the signal generator (11) is periodically stored in a control signal memory (19) and read from the control signal memory (19) into the control section (12) at a predefinable interval of time (tSMU) following an outputting of a high frequency signal section.

7. Method according to claim 6,
**characterised in that**
the predefinable interval of time (tSMU) between the outputting of a high frequency signal section and the reading in of the control signal by the signal generating section (12) is formed as the sum of a predetermined portion (t1) and an adjustable portion (t2).

8. Method according to claim 6 or 7,
**characterised in that**
a set of parameters for determining a high frequency signal type is read in by the control section (12) and depending on a recognised high frequency signal type the control signal memory (19) is read out automatically by the control section (12) at a predefinable interval of time (tSMU) following a preceding outputting of a high frequency signal section.

9. Method according to one of claims 6 to 8,
**characterised in that**
a sequence in which the redundant sets of data are selected after the reading in of a first control signal by the control section (12) follows a predefinable pattern.

10. Method according to one of claims 6 to 9,
**characterised in that**
a first number of different sets of data having the same useful data content is stored in at least a first number of memory segments (17.i) of the memory (17) and the selection of the new sets of data of the memory segments (17.i) is carried out from a determinable second number of sets of data, wherein the second number is smaller than or equal to the first number.

## Revendications

1. Générateur de signaux destiné à tester des stations de base servant à la téléphonie mobile numérique, comprenant une partie de génération de signaux et une partie de commande (12) reliée à celle-ci, et une mémoire (17), qui comporte au moins un premier segment de mémoire (17.i) et un deuxième segment de mémoire (17.i), dans lequel un premier ensemble de données est mis en mémoire dans le premier segment de mémoire (17.i) et un deuxième ensemble de données est mis en mémoire dans le deuxième segment de mémoire (17.i), dans lequel le premier et le deuxième ensemble de données présentent le même contenu de données utiles et sont différents l'un de l'autre et respectivement l'un des ensembles de données peut être sélectionné et peut être amené à la partie de génération de signaux (13) pour la génération et l'émission d'une partie de signal haute fréquence à modulation numérique, et comprend un raccord de commande (16) sur lequel s'applique un premier signal de commande ou un deuxième signal de commande qui peut être lu dans la partie de commande (12) avec un décalage temporel (tSMU) pouvant être déterminé par rapport à une émission précédente d'une partie de signal haute fréquence générée sur la base d'un des ensembles de données, dans lequel la partie de commande (12) est conçue de sorte que, lors de la lecture du premier signal de commande, pour la génération et pour l'émission d'une partie de signal haute fréquence subséquente, un ensemble de données différent de l'ensemble de données servant de base à la génération et à l'émission d'une partie de signal haute fréquence précédente, et présentant le même contenu de données utiles, est sélectionné, et de sorte que, lors de la lecture du deuxième signal de commande, un ensemble de données défini présentant le même contenu de données utiles est sélectionné, dans lequel le raccord de commande (16) est une entrée du générateur de signaux (11) pour la prescription d'une atténuation de signal ou une entrée de déclenchement du générateur de signaux (11), dans lequel l'entrée ou l'entrée de déclenchement peut être consultée de manière périodique et le signal de commande appliqué peut être mis en mémoire dans une mémoire de signal de commande (19) et la mémoire de signal de commande (19) est reliée à la partie de commande (12).

2. Générateur de signaux selon la revendication 1,
**caractérisé**
**en ce que** l'écart temporel (tSMU) pouvant être prédéterminé est composé d'une part prédéfinie (t1) et d'une part réglable (t2).

3. Générateur de signaux selon la revendication 1 ou 2,
**caractérisé**
**en ce que** la partie de commande (12) est reliée à une interface de saisie (20) par l'intermédiaire de laquelle un ensemble de paramètres permettant de déterminer un type de signal haute fréquence peut être prédéterminé et une consultation de la mémoire de signal de commande (19) peut être réalisée automatiquement avec un écart temporel (tSMU) pouvant être prédéterminé après une émission précédente d'une partie de signal haute fréquence par la partie de génération de signal (13) en fonction d'un type de signal haute fréquence déterminé par l'ensemble de paramètres.

4. Générateur de signaux selon l'une quelconque des revendications 1 à 3,
**caractérisé**
**en ce qu'**un ordre des ensembles de données pouvant être amenés successivement à la partie de génération de signaux (13) lorsqu'un premier signal de commande est appliqué peut être prédéterminé.

5. Générateur de signaux selon l'une quelconque des revendications 1 à 4,
**caractérisé**
**en ce que** la mémoire (17) comprend au moins un premier nombre de segments de mémoire (17.i) et respectivement un ensemble de données est mis en mémoire dans les segments de mémoire (17.i), dans lequel les ensembles de données présentent le même contenu de données utiles et sont différents les uns des autres et un deuxième nombre pouvant être sélectionné d'ensembles de données peut être déterminé, qui est inférieur au premier nombre d'ensembles de données.

6. Procédé destiné à tester des stations de base servant à la téléphonie mobile numérique au moyen d'un générateur de signaux (1), le procédé comprenant les étapes suivantes :
- la génération d'au moins un premier et un deuxième ensemble de données présentant le même contenu de données utiles composé de données utiles codées au moyen du générateur de signaux (11),
- la mise en mémoire du premier et du deuxième ensemble de données dans respectivement un segment de mémoire (17.i) d'une mémoire (17) du générateur de signaux (11),
- la sélection d'un ensemble de données au moyen d'une partie de commande (12) et la génération d'une partie de signal haute fréquence à modulation numérique au moyen d'une partie de génération de signaux (13) du générateur de signaux (11),
- l'émission de la partie de signal haute fréquence à modulation numérique,
- la réception et l'évaluation de la partie de signal haute fréquence à modulation numérique par une station de base (1),
- le contrôle de la présence d'erreurs dans une partie d'évaluation (4) dans la partie de signal haute fréquence évaluée,
- l'émission d'un premier signal de commande lorsque des erreurs sont constatées dans la partie de signal haute fréquence évaluée ou d'un deuxième signal de commande lorsque la partie de signal haute fréquence est évaluée comme étant correcte, par l'intermédiaire d'une sortie de signal de commande (8),
- la lecture du premier ou du deuxième signal de commande au moyen de la partie de commande (12) avec un écart temporel (tSMU) pouvant être déterminé par rapport à l'émission de la partie de signal haute fréquence modulée,
- la sélection d'un nouvel ensemble de données d'un des segments de mémoire (17.i) au moyen de la partie de commande (12), dans lequel un ensemble de données est sélectionné, qui comprend le même contenu de données utiles et est différent de l'ensemble de données précédemment sélectionné, lorsqu'un premier signal de commande a été lu, et dans lequel un ensemble de données déterminé est sélectionné, lorsqu'un deuxième signal de commande a été lu et
- la génération d'une nouvelle partie de signal haute fréquence à modulation numérique au moyen de la partie de génération de signaux (13) à partir du nouvel ensemble de données et l'émission de la partie de signal haute fréquence, dans lequel la station de base (12) est reliée à une entrée (16) du générateur de signaux (11) pour la prescription d'une atténuation de signal ou à une entrée de déclenchement du générateur de signaux (16) et le premier ou le deuxième signal de commande s'appliquant sur l'entrée (16) ou l'entrée de déclenchement (16) du générateur de signaux (11) est mis en mémoire de manière périodique dans une mémoire de signal de commande (19) et lu à partir de la mémoire de signal de commande (19) dans la partie de commande (12) avec un écart temporel (tSMU) pouvant être déterminé par rapport à respectivement une émission d'une partie de signal haute fréquence.

7. Procédé selon la revendication 6,
**caractérisé**
**en ce que** l'écart temporel (tSMU) pouvant être déterminé entre l'émission d'une partie de signal haute fréquence et la lecture du signal de commande par la partie de génération de signaux (12) est formé en tant que somme d'une partie prédéfinie (t1) et d'une partie réglable (t2).

8. Procédé selon la revendication 6 ou 7,
**caractérisé**
**en ce qu'**un ensemble de paramètres pour la détermination d'un type de signal haute fréquence est lu par la partie de commande (12) et, en fonction d'un type de signal haute fréquence identifié, la mémoire de signal de commande (19) est consultée automatiquement par la partie de commande (12) avec un écart temporel (tSMU) pouvant être prédéfini par rapport à une émission précédente d'une partie de signal haute fréquence.

9. Procédé selon l'une quelconque des revendications 6 à 8,
**caractérisé**
**en ce qu'**un ordre dans lequel les ensembles de données redondants sont sélectionnés après la lecture d'un premier signal de commande par la partie de commande (12) suit un schéma pouvant être prédéfini.

10. Procédé selon l'une quelconque des revendications 6 à 9,
**caractérisé**
**en ce qu'**un premier nombre de différents ensembles de données présentant le même contenu de données utiles est mis en mémoire dans au moins un premier nombre de segments de mémoire (17.i) de la mémoire (17), et la sélection des nouveaux ensembles de données des segments de mise en mémoire (17.i) est réalisée à partir d'un deuxième nombre pouvant être déterminé d'ensembles de données, dans lequel le deuxième nombre est inférieur ou égal au premier nombre.
